# EUROPEAN PATENT SPECIFICATION

(11) **EP 2 193 302 B1**
(45) Date of publication and mention of the grant of the patent: **10.04.2013**
(21) Application number: 08806277.3
(22) Date of filing: 15.09.2008
(51) Int. Cl.: F16L 33/01, F16L 33/22, F16L 11/14, F16L 9/12

(54) **IMPROVEMENTS RELATING TO HOSE END FITTINGS**
SCHLAUCHENDARMATUREN BETREFFENDE VERBESSERUNGEN
AMÉLIORATIONS APPORTÉES À DES RACCORDS D'EXTRÉMITÉ DE TUYAU

(30) Priority: 14.09.2007 GB 0718018; 14.09.2007 GB 0718019; 14.09.2007 GB 0718020
(43) Date of publication of application: 09.06.2010
(73) Proprietor: BHP Billiton Petroleum Pty Ltd, Melbourne, VIC 3000 (AU)
(72) Inventor: WITZ, Joel, Aron, Newdigate, Surrey RH5 5DS (GB)
(74) Representative: Curtis, Philip Anthony
(86) International application number: PCT/GB2008/003121
(87) International publication number: WO 2009/034357

(56) References cited:
- WO-A-2004/079248

## Description

This invention relates to an end fitting for a hose, particularly hose which can be used in cryogenic conditions. The invention also relates to a hose incorporating the end fitting.

Typical applications for hose involve the pumping of fluids from a fluid reservoir under pressure. Examples include supplying of domestic heating oil or LPG to a boiler; transporting produced oilfield liquids and/or gases from a fixed or floating production platform to the cargo hold of a ship, or from a ship cargo hold to a land-based storage unit; delivering of fuel to racing cars, especially during refuelling in formula 1; and conveying corrosive fluids, such as sulphuric acid.

It is well known to use hose for the transport of fluids, such as liquefied gases, at low temperature. Such hose is commonly used to transport liquefied gases such as liquefied natural gas (LNG) and liquefied propane gas (LPG).

In order for the hose to be sufficiently flexible, any given length must be at least partially constructed of flexible materials, i.e., non-rigid materials.

The present invention is directed to composite hose. Conventional composite hoses are made of layers of polymeric films and fabrics sandwiched between an inner and outer helical metallic wire. The hose is constructed by wrapping around a mandrel, in sequence, the inner wire, combinations of films and fabric, and the outer wire. The inner and outer wires have the same helical pitch but are offset by half the pitch length to form a corrugated hose wall profile. The resulting tubular structure is then extracted from the mandrel and terminated with end fittings. The end fittings are typically constructed of a metallic tail and a ferrule. The tail has two parallel helical groves machined into the outer surface which matches the double helix formed by the inner and outer wires. The tail is inserted into the bore of the hose with a ferrule on the outside. Depending on the application, the end of the hose pack may be bound, capped with a rubber cuff or impregnated with a two part epoxy resin, and the ferrule is then crimped or swaged down on to the tail to retain the end of the hose. A hose of this general type is described in European patent publication no. 0076540A1. The hose described in this specification includes an intermediate layer of biaxially oriented polypropylene, which is said to improve the ability of the hose to resist the fatigue caused by repeated flexing.

In our earlier patent application WO01/96772, we described a new composite hose which incorporated a braid with the film and fabric layers sandwiched between the two helical wires. We also described a new end fitting for this hose. Further improvements to the hose and end fitting were described in our patent applications WO04/044472 and WO04/079248, this latter document disclosing all features of the preamble of claim 1. These composite hoses may be provided with a large bore and are typically aimed at ship to ship fluid transfer operations which are governed by the requirements of the international Maritime Organisation (IMO). The IMO requirements for hoses (International Code for the Construction and Equipment of Ships Carrying Liquefied Gases in Bulk - the "IGC Code") are demanding (for reasons of safety) that the hose burst pressure must be five times the maximum working pressure at the extreme service temperature. The maximum working pressure typically ranges from the minimum required by IMO of 10 barg up to 20 to 30 barg.

It is important that the end fitting is able to accommodate safely the stresses induced by the IMO burst pressure test. End fittings are made from metallic components and the tail in particular must be able to accommodate the hoop stress induced by the internal pressure which is given to first approximation by the Barlow formula which states that the hoop stress is equal to the product of the internal pressure and the internal diameter divided by twice the wall thickness of the tube forming the tail. The allowable stress is determined by the standard pressure vessel design codes such the ASME Boiler and Pressure Vessel Code as a proportion, two thirds say, of the tail material's yield stress. Typical tail materials are carbon steels for non cryogenic applications and austenitic stainless steels for cryogenic service i.e. typically temperatures below 150 °K. Carbon steels are not suitable for cryogenic service as they are brittle at very low temperatures.

Exemplary austenitic stainless steel grades for cryogenic service are the "series 300" which do not exhibit low temperature brittleness. The important material properties are the yield stress (YS), the yield strain (EY), the ultimate tensile strength (UTS), the failure strain (EF), the elastic modulus (E), the density (RHO), the thermal conductivity (K) and the thermal expansion coefficient (CTE). These properties vary over the range from ambient (293 °K) to cryogenic temperatures (4 °K for Liquid Helium or 77 °K for Liquid Nitrogen [LN₂]). In general, the strength increases with reducing temperature. This is illustrated by considering as an example AISI grade 304 (8 g/cc density) which is a commonly used austenitic stainless steel for cryogenic service. The YS & UTS of 304 at room temperature is about 250 MPa & 590 MPa respectively, and at LN₂ temperature (77 °K) about 400 MPa & 1525 MPa respectively. While there is some reduction in the ductility with EF reducing from 60% at ambient temperature to 40% at LN₂ temperature, there is more than adequate ductility with 304 at this cryogenic temperature. Although this increase in strength is considered beneficial, designers of cryogenic pressure vessels tend to rely on the minimum ambient temperature specifications. The ambient LN₂ temperature elastic moduli for 304 are 193 GPa and 205 GPa respectively.

An important design issue for cryogenic equipment is the effects of the dimensional changes and thermal gradient transients associated with the circa 215 °K temperature change room ambient to cryogenic service conditions. Steels such as 304 are thermally conductive and they will contract with decreasing temperature. The thermal conductivities for 304 at room temperature and LN₂ temperature are 8 & 15 W/m.°K respectively. The average CTE over this temperature range is 13×10⁻⁶ °K⁻¹ i.e. a length contraction of about 3mm/m for this temperature difference of 216 °K.

This contraction presents a problem for conventional end fittings in conditions of thermal shock where the end fitting is rapidly exposed to cryogenic fluid. This may cause a transient differential thermal contraction in the radial direction between the tail and ferrule, resulting in some leakage. This is further accentuated in long term service conditions if an epoxy resin is relied on as a filler to seal any small leak paths. The CTE for epoxy resign is about 50×10⁻⁶ °K⁻¹ to 80×10⁻⁶ °K⁻¹ and therefore the resin will try to contract more than the adjacent austenitic stainless steel. With repetitive thermal cycles the resin bond with the steel may fail and a leak path may subsequently develop. This is a known problem in the field which may be addressed by careful control of the thermal exposure profile and/or the detailed design of the end fitting assembly.

With the end fitting described in generic WO04/079248, because of the advantage of having a separate ring to provide the sealing function, the sealing activation is carried out to compensate for the thermal shock and we have found this to be a satisfactory solution in our full scale testing with both LN₂ and LNG.

We have also found it beneficial to construct the tail of 36% Nickel, balance Iron metal alloy, sometimes called by the Trademarks Invar and Pemifer 36, (density 8.1g/cc), which has comparable strength to austenitic stainless steels but with a substantially lower CTE. At ambient condition the minimum YS and UTS of Ni36 are 240 MPa and 450 MPa respectively with representative test results showing the YS increasing from 270 MPa at room temperature to 700 MPa at LN₂ temperature. The EF is 40% over this temperature range. The thermal conductivities for Ni36 at room temperature and LN₂ temperature are 6 & 13 W/m.°K respectively.

It can be seen that the properties of Ni36 are similar to that of 304 for cryogenic service but with one notable exception. The average CTE over the temperature range from ambient conditions to LN₂ temperatures is 1-2×10⁻⁶ °K⁻¹ i.e. a length contraction of about 0.4mm/m for this temperature difference of 216 °K. This is an order of magnitude less radial contraction compared with austenitic stainless steel, which is a considerable advantage in improving the reliability of the sealing mechanism.

The corrosion resistance of a Ni36 for marine service may be achieved with the deposition of a corrosion resistant cladding of a nickel-chromium or nickel-copper alloy such as Inconel (trademark) or Monel (trademark) as examples.

In large bore hoses, e.g. 20" to 24" (500 to 600 mm), it is not practical to control the thermal transients because of the volume of cryogenic fluid that is involved. Furthermore, with increasing bore size and maintaining the high pressure retaining capacity results in increasingly heavy end fittings which become difficult to handle and deploy. We have found that there is a practical problem of achieving a high pressure capacity, light weight end fitting and to limit the thermal shock using the established metal based solution.

We have found that in order to solve the aforementioned end fitting issues for large bore hoses it is possible to construct the end fitting components from a composite material, that expands upon cooling_{.} It should be noted that this reference to "composite material" differs from the use of the word "composite" in "composite hoses".

Thus, according to one aspect of the invention we provide an end fitting for a composite hose of the type comprising a tubular body of flexible material arranged between inner and outer gripping members, said end fitting comprising a first member adapted to be disposed within the hose, and a second member adapted to be disposed around the outside of the hose, whereby the end of the hose can be sealed between the first and second members, and wherein at least part of the first member and/or at least part of the second member is made of a material, that expands upon cooling in at least one direction.

The term "first member" represents the tail in the above discussion of the prior art, while the term "second member" represents the ferrule.

The first member may be made entirely of a composite material. However, we prefer that just the part of the material that is adapted to fit within the hose that is made of a composite material which expands on cooling.

"Composite materials" are materials that are made from a combination of two or more materials to give a unique and tailor made set of properties. The most common form of composite material is a matrix of fibres within a resin. The fibres may be continuous with an orientation in the longitudinal direction or the fibres may be short lengths in mixed orientation. The fibres are usually high strength fibres such as E-Glass, S-Glass, Aramid (e.g. Kevlar (trademark)) or Carbon. The resin encapsulates the fibres and it may be a thermoplastic resin such as a polyethylene, a polyimide, a polyamide, a fluoropolymer, poly(vinylchloride) (PVC), polyurethane (PU), Polyetheretherketone (PEEK) or a thermosetting resin such as an epoxy or a polyester or a vinyl ester. The composite material may be a laminated construction with layers of longitudinal fibres in a resin matrix orientated in differing directions in order to achieve the desired mechanical properties. The use of high strength fibres within the composite material generally results in a construction with a considerable strength to weight ratio and for this reason composite materials have found widespread application in the aerospace and automotive industries including pressure vessel applications.

Many of the constituent components of a composite material such as epoxy resin would not be suitable for cryogenic service in a bulk homogeneous form, mainly because of their brittleness at low temperatures. However when the constituent materials are carefully combined in fibre and laminate form with other constituent materials in a matrix then the structural interaction is such that the constraints of the bulk homogeneous constituent material may be overcome.

We have found that fibre selection is important and we prefer to use a high strength carbon, aramid, glass or ultra high molecular weight polyethylene fibres or combinations thereof. For example, representative tensile strengths, tensile moduli and densities for E-Glass, Kevlar-49, MS-LM (Medium Strength Low Modulus) Carbon fibres are in order: 3450, 3790, 4138 MPa for the tensile strength; 72, 124, 228 GPa for the tensile modulus; and 2.6, 1.4, 1.8 g/cc for the density. We have found that both thermosetting and thermoplastic resins may be used. The density of epoxy and PEEK (polyetheretherketone) are both about 1.3 g/cc. We have found that by using a composite material containing some of these high strength fibres, particularly in the first member, substantially reduces the weight of the end fitting while retaining the high pressure retaining capacity.

Another advantage of using a composite material is that it has a lower thermal conductivity compared to steel. Typically the thermal conductivity is about 0.1 to 1 W/m.°K which is at least an order of magnitude less than austenitic stainless steel. This is particularly advantageous in cryogenic applications as it reduces the amount of thermal insulation required for the end fitting to minimise the heat influx causing boil of the cryogenic fluid. Gaseous boil off is inefficient in cryogenic liquid transfer and therefore it is highly desirable to minimise the boil off rate. This is particularly important in ship to ship transfer where the end fittings of a floating cryogenic flexible hose are in contact with water.

Because of the inherently lower thermal conductivity of composites it is possible to build in successive layers of insulating materials or composites outside the internal composite layer by making use of the inherent thermal gradient. The insulating layers may be for example hollow insulating fibres in a thermoplastic resin, or aerated polyurethane (PU). The use of PU gives a potentially robust outer mechanical protective layer. Thus, the end first and/or second members of the end fitting may be constructed of a plurality of layers of material, some or all of which are composite material, preferably having a thermal conductivity of 2 W/m.°K or less, more preferably of 1 W/m.°K or less. Some layers of the first and/or second layer may be may of non composite materials, such as non-composite polymeric materials preferably having a thermal conductivity below to 2 W/m.°K, more preferably below to 1 W/m.°K. The non-composite materials may be a thermoplastic resin or PU. Thus it is possible in accordance with the invention to build the components of the end fitting out of layers of material designed to provided the desired bulk properties for the end fitting.

We have found that it is particularly advantageous to use the rather unusual properties of carbon and certain aramid fibres, particularly the poly-(p-phenyleneterephthalamide), known as Kevlar (trademark) or Twaron (trademark), in that they exhibit a negative longitudinal CTE and a positive transverse CTE. For example the longitudinal CTE for Kevlar-49 is -2×10⁻⁶ °K⁻¹ and in the transverse direction is 68x10-6 °K⁻¹. In a laminated composite construction containing these fibres the ply expands in the fibre direction and contracts transversely with reducing temperature. We note that internal shear forces develop within a balanced symmetrical arrangement of plies and the result is a net longitudinal expansion on cooling. By adjusting the fibre direction it is possible to control the magnitude the expansion to the point where an effective longitudinal CTE from zero to about -10×10⁻⁶ °K⁻¹ can be achieved. We are able to construct the composite tail to control the magnitude of the radial dimensional changes under the seal ring to even effect increasing sealing contact pressures with reduction in temperature. The preferred longitudinal CTE range is from below zero (e.g. below or equal to about -0.01 °K⁻¹ or about -0.1 °K⁻¹) to -4×10⁻⁶ °K⁻¹, most preferably - 1×10⁻⁶ to -2×10⁻⁶

Thus, according to the invention, at least part of the first member and/or the second member is made of a material which expands in at least one direction on cooling. It is particularly preferred that at least part of the first member expands on cooling - most preferably it is the part of the first member that is adapted to be disposed within the hose which expands on cooling. Preferably the direction of expansion is radially outward of the first member, whereby the first member can exert a radially outward pressure on the inside of the hose when cooled.

In a particularly preferred embodiment, the first member is made at least partially of a composite material which expands upon cooling, and the second member is made at least partially of a composite material which contracts upon cooling. As discussed above the expansion and/or contraction is preferably in the direction which extends radially of the hose axis. In this embodiment, it is preferred that the first member does not include composite material which contracts upon cooling, and the second member does not include composite material which expands upon cooling.

The end fitting according to the above aspects of the invention described above may also be provided with one or more of the features of the end fitting already described in W004/079248. These will be described in greater detail below.

In a preferred embodiment, the second member includes a hose engaging member adapted to press against the inner member to retain the hose between itself and the first member, and a separate means for retaining one or more layers of the hose, the retaining means comprising an outer retaining member adapted to press against an inner retaining member to retain the or each layer of the hose between the outer and inner retaining members of the retaining means.

Preferably, the inner and outer retaining members are ring-shaped. More preferably the inner and outer retaining members are preferably provided in the form of a ring, preferably with the outer retaining member being disposed concentric with the inner retaining member. More preferably, the first and second members are split rings, to facilitate assembly.

In a preferred embodiment, the outer retaining member which comes into contact with the or each layer of the hose is provided with gripping formations to facilitate gripping of the or each layer of the hose. The surface of the inner retaining member may be provided with corresponding formations.

In a preferred embodiment, the adjacent surfaces of the inner and outer retaining members are provided with gripping formation to facilitate gripping of the or each layer of the hose therebetween.

There may be any convenient number of inner and outer retaining members. In the simplest embodiment, there is one outer retaining member and one inner retaining member. It is possible to provide two or more outer retaining members with one inner retaining member. It is possible to provide two or more inner retaining members with one outer retaining member. And it is possible to provide two or more outer retaining members with two or more inner retaining members, preferably so that each outer retaining member has a corresponding inner retaining member.

The hose engaging member is preferably ring-shaped. The hose engaging member is preferably in the form of a ring, more preferably a split ring. The hose engaging member preferably clamps all the layers of the hose securely between itself and the inner member of the end fitting.

In a preferred embodiment, the inner retaining member of the retaining means is integral with the hose engaging means. In this embodiment the hose engaging means comprises a first part of a first cross-sectional thickness (i.e. diameter, when ring-shaped), and the integral inner retaining member comprises a second part of a second cross-sectional thickness (i.e. diameter, when ring-shaped), the second thickness being less than the first thickness. The outer retaining member may have a third cross-sectional thickness (i.e. diameter, when ring-shaped), and the second and third cross-sectional thicknesses may be equal. Preferably, the sum of the second and third cross-sectional thicknesses is substantially the same as the first cross-sectional thickness.

When the inner retaining member is integral with the hose engaging member, it is preferable that the hose engaging member is L-shaped, so that the inner retaining member extends from the body of the hose engaging member, and the outer retaining member can be receiving in the recess of the L-shape.

When the inner retaining member is integral with the hose engaging member, the inner surface of the inner retaining member may also function to clamp the hose fixedly between the hose between itself and the inner member, i.e., it may contribute to the hose engaging function.

The hose engaging member and/or the retaining members may be made of a composite material, as described above.

The first member may include an elongate tubular bend stiffener adapted to fit within the hose body. The bend stiffener is preferably a polymeric material, most preferably polyurethane. Preferably the bend stiffener is tapered, such that the thickness decreases in a direction away from the end of the hose; the degree of the taper may be optimised for each particular application. Preferably the tip of the bend stiffener (i.e. the part furthest from the end of the hose) is provided with a shoulder against which any outer mechanical protection on the hose may be run.

In a preferred embodiment, the second member may further include a load transmitting member, and an end member, the arrangement being such that the hose engaging member and the end member are connected through the load transmitting member, whereby loads applied to the hose engaging member can be transferred to the end member via the load transferring member. In a preferred embodiment, the load transmitting member comprises a cylindrical member has a first recess for receiving a part of the hose engaging member and a second recess for receiving part of the end member. The load transferring member may be made of a composite material, as described above. The end member may be made of a composite material as described above.

The end member of the second member is preferably integral with the first member.

According to another aspect of the invention, there is provided a hose comprising a tubular body of flexible material arranged between inner and outer gripping members, and an end fitting as described above secured to each end of the hose.

The hose preferably comprises a tubular body and an axial reinforcing braid disposed between inner and outer gripping members, wherein the tubular body comprises a reinforcing layer and a sealing layer. Preferably there are inner and outer reinforcing layers, and the sealing layer is sandwiched between the reinforcing layers.

The hose preferably further comprises a protective and/or insulative layer wrapped around said hose, wherein said protective and/or insulative layer has an end portion which is adapted to be received in the first recess of the cylindrical load transferred member.

Although more than one layer of the hose may be retained by the retaining means of the end fitting, it is particular preferred that the braid alone of the hose is retained between the inner and outer retaining members of the retaining means.

As mentioned above the hose and end fitting can be provide with any combination of the features of the hose and end fitting described in WO01/96772, WO04/044472 and WO04/079248.

The hose according to the invention can be provided for use in a wide variety of conditions, such as temperatures above 100°C, temperatures from 0°C to 100°C and temperatures below 0°C. With a suitable choice of material, the hose can be used at temperatures below -20°C, below -50°C or even below -100°C. For example, for LNG transport, the hose may have to operate at temperatures down to -170°C, or even lower. Furthermore, it is also contemplated that the hose may be used to transport liquid oxygen (bp -183°C) or liquid nitrogen (bp -196°C), in which case the hose may need to operate at temperatures of -200°C or lower.

The hose according to the invention can also be provided for use at a variety of different duties. Typically, the inner diameter of the hose would range from about 2 inches (51 mm) to about 24 inches (610 mm), more typically from about 4, 6 or 8 inches (203 mm) to about 16 inches (406 mm). In general, the operating pressure of the hose would be in the range from about 500 kPa gauge up to about 2000 kPa gauge, or even up to about 4000 kPa gauge, or higher. These pressures relate to the operating pressure of the hose, not the burst pressure (which must be several times greater). The volumetric flow rate depends upon the fluid medium, the pressure and the inner diameter. Flowrates from 1000 m³/h up to 12000 m³/h are typical.

The hose according to the invention can also be provided for use with corrosive fluids , such as strong acids.

Reference is now made to the accompanying drawings in which:
Fig. 1 is a perspective view of a hose with which the end fitting according to the invention may be used;
Fig. 2 is a schematic cross sectional view of a first embodiment of an end fitting for a hose, according to the invention;
Fig. 3 is a schematic cross sectional view of a second embodiment of an end fitting for a hose, according to the invention;
Fig. 4 is a schematic cross sectional view of a third embodiment of an end fitting for a hose, according to the invention;
Figs. 5 is enlarged schematic cross sectional view of part of a hose engaging member of the end fitting according to the invention before assembly;
Figs. 6 is enlarged schematic cross sectional view of part of a hose engaging member of the end fitting according to the invention after assembly.

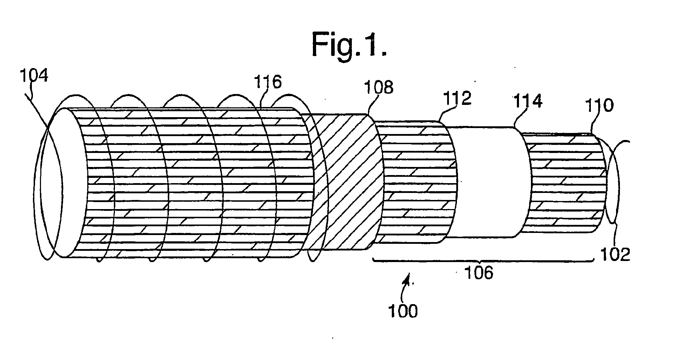

The type of hose to which this invention applies is described in detail in WO01/96772. Figure 1 shows the hose 100 in more detail.

Briefly, the hose 100 comprises inner and outer gripping members 102 and 104, which are preferably arranged in a helical form, and are preferably wires. A tubular body 106 and an axial reinforcing braid 108, which surrounds the tubular body 106, are arranged between the gripping members 102 and 104. The tubular body comprises an inner reinforcing layer 110, and outer reinforcing layer 112 and a sealing layer 114 arranged between the inner and outer reinforcing layers 110 and 112. An outer protective/insulative layer 116 surrounds the braid 108. As mentioned above the hose 100 is described in greater detail in WO01/96772.

The ends of the hose may be sealed using the end fitting 200 shown in the figure. The hose has not been shown in the figure, in order to improve the clarity. The end fitting 200 comprises a tubular inner member 202 having a hose end 202a and a tail end 202b. The part 202a is advantageously a composite material which expands in at least one direction on cooling, most preferably in the direction radial to the hose 100 longitudinal axis. The tail end may also be made of a composite material, to reduce the weight of the assembly. The end fitting 200 further includes a sealing member which comprises a sealing ring 204, which is typically based on a polymeric resin such as PTFE, optionally with a ceramic filler, and a stainless steel split ring 206 around the sealing ring 204. The ring 206 may be made of a composte material.

The end fitting 200 further includes a load transferring means which comprises a hose engaging member 208, a load transferring member 210 and an end member in the form of a disk-shaped plate 212. The plate 212 is integral with the tail end 202b of the inner member 202, as illustrated at 212b. The load transferring member comprises a disk-shaped plate 214 and at least one load transferring rod 216. In the figure there are two of the rods 216, but it is preferable to provide three or more of the rods 216, and it is preferable that the rods are equi-spaced around the circumference. A tightening nut 218 is provided on each rod 216. The plates 212 and 214 have apertures 212a and 214a respectively for receiving the rods 216. One or more, or all, of the parts 210, 212, 214, 216 and 218 may be made of a composite material which expands in at least one direction on cooling.

The hose engaging member 208 is provided with an inner helical recess in the form of grooves 208a which are adapted to receive the outer wire of the hose therein. The inner member 202 is provided with an outer helical recess in the form of grooves 202d which are adapted to receive the inner wire 22 therein. The grooves 208a and 202d are spaced by half a pitch length p, where p is the pitch length of the gripping wires of the hose (not shown).

The hose engaging member 208 also includes a retaining means for retaining the braid 108 of the hose 100. The retaining means comprises an inner retaining member 230 which is integral with the rest of the hose engaging member, and a separate outer retaining member 232. The outer 232 is capable of clamping the braid 108 of the hose 100 between itself and the inner member 230. The outer member 232 has gripping formations on the inner surface thereof to facilitate gripping the braid 108 between the outer member 232 and the inner member 230. The gripping formations are preferably circumferential but can take other patterns.

The parts 206, 208, 230 and 232 are preferred to contract on cooling. This can be achieved by making them of steel or a composite material which contracts in at least one direction on cooling.

The member 202 is provided with two circumferential projections 202e which are located under the sealing ring 204. The projections 202e serve the improve the sealing of the tubular member between the inner member 202 and the sealing ring 204, and help to prevent the tubular member from inadvertently being pulled out of position.

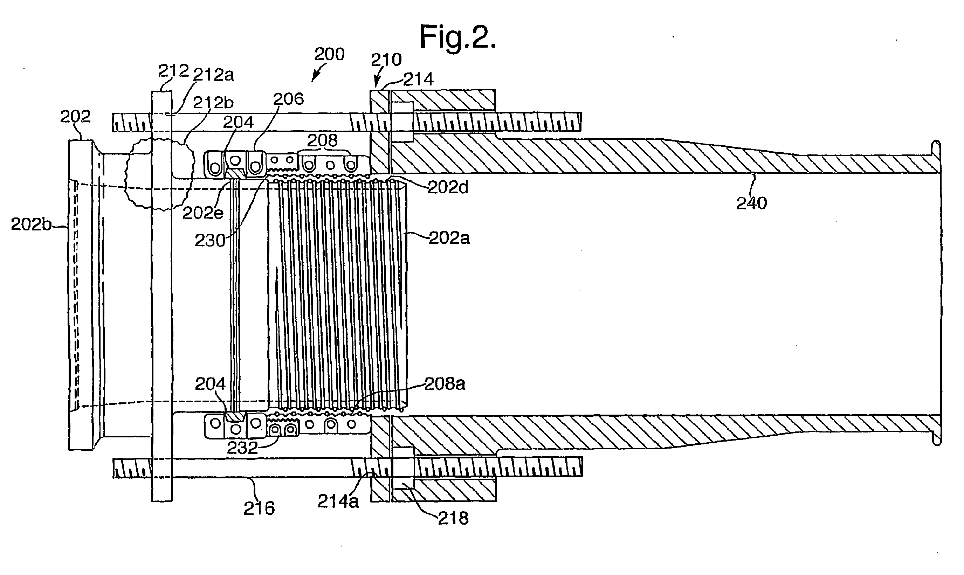

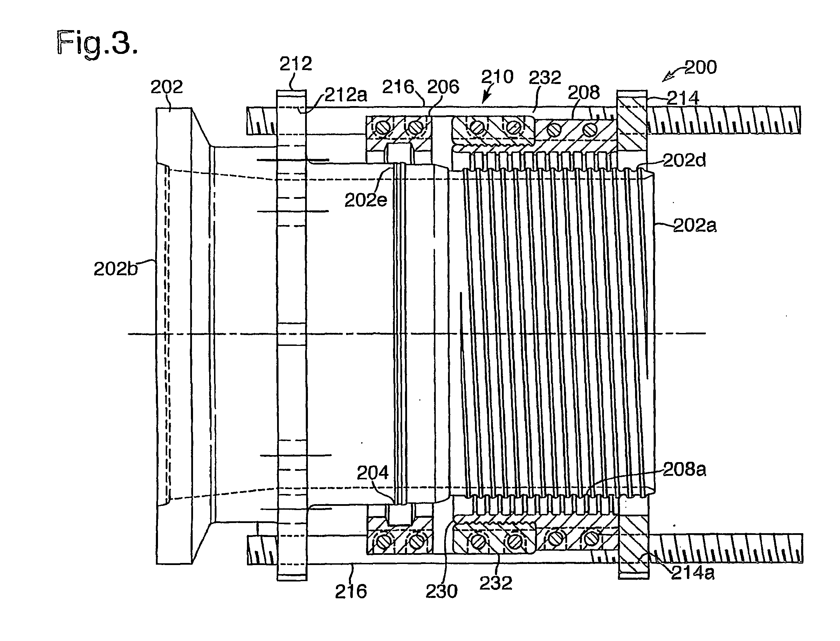

The end fitting 200 is also provided with a flexible polymeric bend stiffener 240 which has apertures 242 through which the rods 216 may be received. One end of the bend stiffener 240 abuts the plate 214. The parts 202e and 240 may be made of a composite material which expands in at least one direction on cooling.Fig.3 shows an end fitting which is similar to the end fitting shown in Fig. 2, and the same reference numerals have been used to designate the parts. The differences are: the bend stiffener is not provided in the design shown in Fig.2, although it could be, if desired; the plates 212 and 214 have a smaller diameter, so that the structure is more compact.

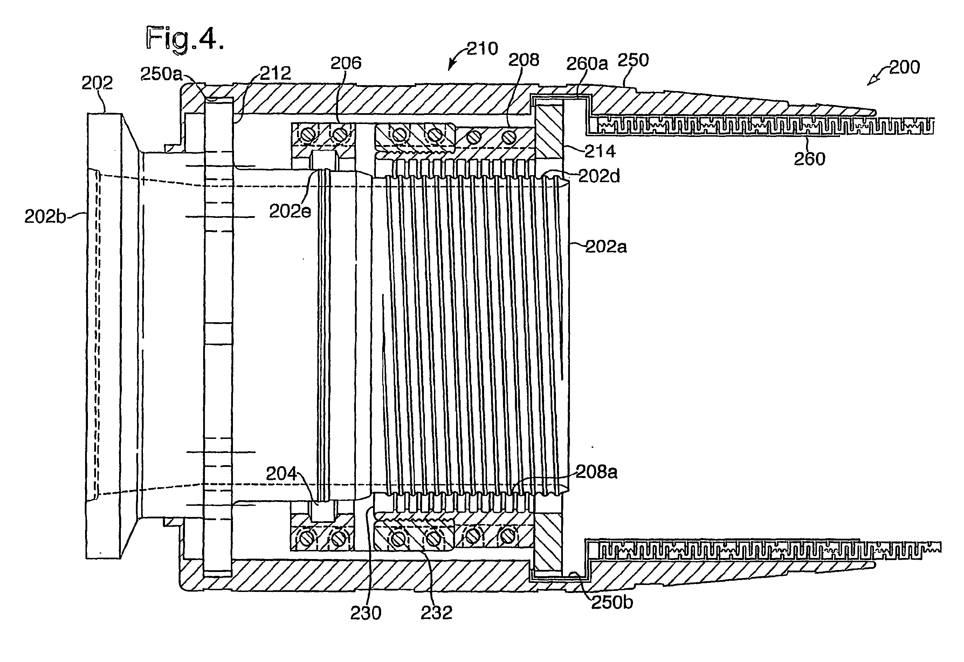

Fig.4 shows an end fitting which is similar to the end fitting shown in Fig. 2, and the same reference numerals have been used to designate the parts. In figure 4 the load transferring rod has been replaced by a load transferring member 250 which has recesses 250a and 250b adapted to receive the edges of plates 212 and 214 respectively. The part 250 may be made of a composite material which expands in at least one direction on cooling.

The recess 250b also receives and end portion 260a of a protective and/or insulative layer 260 provided on the outer surface of the hose 100 (i.e. provided outside the gripping member 104. The layer 260 may be the same sort of layer as described in our copending international patent publication W004/044472. This comprises an elongate profiled member which is wrapped helically around the outside of the hose 100.

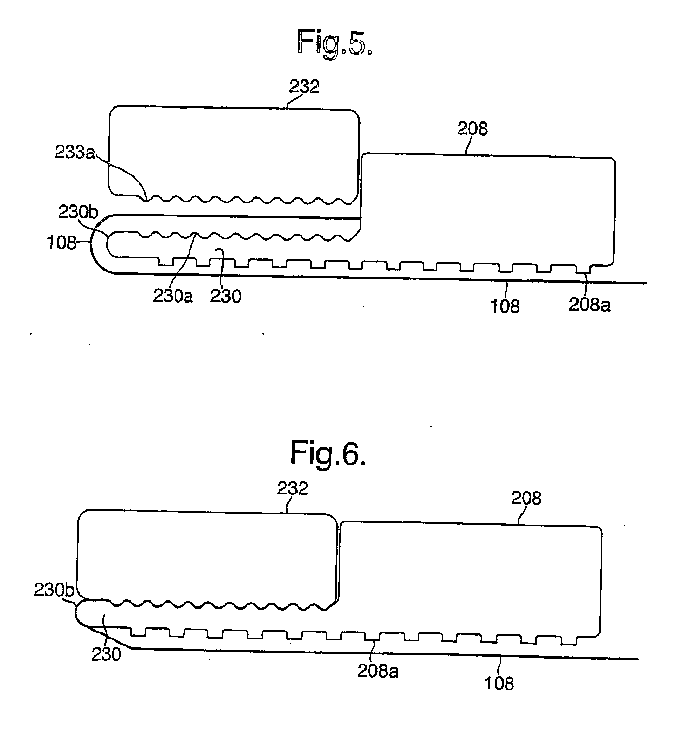

Reference is now made to Figs. 5 & 6. For the axial reinforcing braid 108 to function most effectively, it should be securely anchored at the end fitting 200. The outer member 232 mates with the inner member 230 to provide this anchor. This interface is designed to reduce to zero the tension in the braid 108, caused by hose pressure and tension, in order to help prevent the braid 108 from being pulled from the anchor.

When the braid 108 is pulled axially it tries to reduce its radius, owing to the braid structure. If it is prevented from reducing its radius then a contact pressure is generated equal to the local tension times the local curvature. To illustrate the concept of local curvature, consider a string were wrapped around a cylinder, where the local curvature is the reciprocal of the cylinder radius. This contact force times the local friction coefficient anchors the braid 108 (this is the so called "capstan" effect). The frictional force is non-linear because of the undulating formations 230a and 232a on the members 230 and 232 - it would be linear if it were straight plates. Non-linear decay is more effective.

The braid folds back out of the hose body around a filleted front edge 230b of the member 230. The filleted edge 230b prevents large stress concentrations being induced in the braid 108 as a result of the contact of the braid 108 with the member 232 under tension. This radius controls the contact pressure generated by the tension in the braid 108. The drop in tension is a non-linear function of the product of the angle of contact the braid makes with the radius and the local friction coefficient. In the case shown, where the radius of the fillet is constant, the non-linear function is exponential.

When the outer member 232 is fully mated against the inner member 232 the profiled surfaces 230a and 232a of the first and second members respectively mate closely thus forcing the braid 108 to pass through a series of undulations. Each undulation acts as a capstan and so reduces the tension in the braid as described earlier.

The hose is secured to the end fitting 200 as follows. The inner member 202 is threaded into the end of the hose, so that the hose lies close to the plate 212. The inner wire of the hose is received in the grooves 202d and the outer wire of the hose is received in the grooves 208a. The inner and outer wires are cut back so that they do not extend along the inner member 202 beyond the grooves 202d and 208a. Any insulation of the hose is also cut back to this point. The inner reinforcing layer of the hose is also cut back at this point, or at some point before it reaches the sealing ring 204. This means that the sealing layer of the hose directly engages the outer surface of the inner member 202. The rest of the tubular body of the hose is allowed to extend along the inner member 202 between the inner member 202 and the sealing ring 204.

The hose engaging member 208 is then tightened to cause it to clamp down on the hose bring it into firm engagement with the hose. The nuts 218 are then tightened, which induces some axial tension in the hose, thereby taking up any play in the system. These forces are transmitted from the hose engaging member 208, to the plate 214, to the rod 216, to the plate 212, and to the tail end 202b of the inner member 202. The tubular member is pulled back over the upper surface of the hose engaging member 208, and between the outer member 232 and the inner member 230. The second outer 232 and the inner member 230 clamp the braid 108 firmly in place.

The tubular body 106 of the hose 100 extends under the sealing ring 204. After the hose engaging member 208 and the nuts 218 have been tightened, the split ring 206 is tightened in order to increase the force applied on the tubular body by the sealing ring 204.

The end fitting 200 is then cooled to a low temperature by liquid nitrogen. This causes the sealing ring 204 to contract relatively more than the split ring 206, whereby the compressive force applied on the sealing ring 204 by the split ring 206 is reduced. While the split ring 206 and the sealing ring 204 are at a relatively low temperature, the split ring 206 is again tightened. The temperature is then allowed to rise to ambient conditions, whereby the compressive force on the sealing ring increases by virtue of the greater expansion of sealing ring 204 relative to the split ring 206.

It will be appreciated that the invention described above may be modified. For example, the inner retaining member 230 could be separate from the rest of the hose engaging member. Furthermore, additional inner and outer retaining members 230 and 232 may be provided.

## Claims

1. An end fitting (200) for a composite hose (100) of the type comprising a tubular body (106) of flexible material arranged between inner and outer gripping members (102, 104), said end fitting comprising a first member (202) adapted to be disposed within the hose, and a second member (208) adapted to be disposed around the outside of the hose whereby the end of the hose can be sealed between the first and second members, **characterized in that** at least part of the first member and/or at least part of the second member is made of a material that expands upon cooling in at least one direction.

2. An end fitting according to claim 1, wherein at least part of the first member (202) is made of a material that expands upon cooling in at least one direction thereof.

3. An end fitting according to claim 2, wherein said part of the first member is adapted to expand on cooling in a direction radially outward with respect to the hose axis.

4. An end fitting according to claim 1, 2 or 3, wherein at least part of the first member and/or at least part of the second member is made of a composite material.

5. An end fitting according to claim 4, wherein at least part of the first member is made of a composite material.

6. An end fitting according to claim 4 or 5, wherein the composite material comprises carbon, aramid, glass or UHMWPE fibres.

7. An end fitting according to any preceding claim, wherein at least part of the second member (208) is adapted to contract on cooling in a direction radially inward with respect to the hose axis.

8. An end fitting according to any preceding claim, wherein the longitudinal coefficient of thermal expansion of the material which expands upon cooling is from zero to -10×10⁻⁶ °K⁻¹.

9. An end fitting according to any preceding claim, wherein the material which expands upon cooling is a composite material comprising carbon fibres or fibres of poly-(p-phenyleneterephthalamide).

10. An end fitting according to any preceding claim, wherein the first member (202) is made at least partially of composite material which expands upon cooling, and the second member (208) is made at least partially of a composite material which contracts upon cooling.

11. A hose (100) comprising a tubular body (106) of flexible material arranged between inner and outer gripping members (102, 104), and further comprising an end fitting (200) according to any preceding claim secured to each end of the hose.

12. A hose according to claim 11, wherein the tubular body comprises a reinforcing layer and a sealing layer.

13. A hose according to claim 11, wherein the tubular body comprises inner and outer reinforcing layers (110, 112) and a sealing layer (114) disposed between the inner and outer reinforcing layers.

14. A hose according to claim 11, 12 or 13, further comprising an axial strengthening means.

15. A hose according to claim 14, wherein the axial strengthening means comprises an axial reinforcing braid (108).

## Patentansprüche

1. Eine Endarmatur (200) für einen Verbundwerkstoffschlauch (100) eines Typs, der einen röhrenförmigen Körper (106) flexiblen Materials umfasst, welcher zwischen inneren und äußeren Greifelementen (102, 104) angeordnet ist, benannte Endarmatur umfassend ein erstes Element (202), so ausgeführt, dass es innerhalb des Schlauchs anzubringen ist, und ein zweites Element (208), so ausgeführt, dass es um die Außenseite des Schlauchs anzubringen ist, wodurch das Ende des Schlauchs zwischen dem ersten und dem zweiten Element abgedichtet werden kann, **dadurch gekennzeichnet, dass** mindestens ein Teil des ersten Elements und/oder mindestens ein Teil des zweiten Elements aus einem Material hergestellt ist, welches sich bei Abkühlung in mindestens eine Richtung ausdehnt.

2. Eine Endarmatur nach Anspruch 1, bei welcher zumindest ein Teil des ersten Elements (202) aus einem Material hergestellt ist, das sich bei Abkühlung in mindestens eine Richtung desselben ausdehnt.

3. Eine Endarmatur nach Anspruch 2, bei welcher der genannte Teil des ersten Elements so ausgeführt ist, dass er sich bei Abkühlung radial in eine im Verhältnis zur Schlauchachse nach außen weisende Richtung ausdehnt.

4. Eine Endarmatur nach Anspruch 1, 2 oder 3, bei welcher mindestens ein Teil des ersten Elements und/oder mindestens ein Teil des zweiten Elements aus einem Verbundwerkstoff hergestellt ist.

5. Eine Endarmatur nach Anspruch 4, bei welcher mindestens ein Teil des ersten Elements aus einem Verbundwerkstoff hergestellt ist.

6. Eine Endarmatur nach Anspruch 4 oder 5, bei welcher der Verbundwerkstoff Kohlefasern, Aramidfasern, Glasfasern oder UHMWPE-Fasern umfasst.

7. Eine Endarmatur nach einem beliebigen vorangegangenen Anspruch, bei welcher mindestens ein Teil des zweiten Elements (208) so ausgeführt ist, dass er sich bei Abkühlung radial in eine im Verhältnis zur Schlauchachse nach innen weisende Richtung zusammenzieht.

8. Eine Endarmatur nach einem beliebigen vorangegangenen Anspruch, bei welcher der Wärmeausdehnungskoeffizient in Längsrichtung des sich bei Abkühlung ausdehnenden Materials von Null bis -10x10⁻⁶ °K⁻¹ beträgt.

9. Eine Endarmatur nach einem beliebigen vorangegangenen Anspruch, bei welcher das Material, das sich bei Abkühlung ausdehnt, ein Verbundwerkstoff ist, der Kohlefasern oder Fasern von Poly-(p-phenylen-terephthalamid) umfasst.

10. Eine Endarmatur nach einem beliebigen vorangegangenen Anspruch, bei welcher das erste Element (202) mindestens zum Teil aus einem Verbundwerkstoff hergestellt ist, der sich bei Abkühlung ausdehnt, und bei welcher das zweite Element (208) mindestens zum Teil aus einem Verbundwerkstoff hergestellt ist, der sich bei Abkühlung zusammenzieht.

11. Ein Schlauch (100), umfassend einen zwischen inneren und äußeren Greifelementen (102, 104) angeordneten röhrenförmigen Körper (106) aus flexiblem Material, und ferner umfassend eine Endarmatur (200) entsprechend einem beliebigen vorangegangenen Anspruch, welche an jedem Ende des Schlauchs befestigt ist.

12. Ein Schlauch nach Anspruch 11, bei welchem der röhrenförmige Körper eine Verstärkungslage und eine Dichtungslage umfasst.

13. Ein Schlauch nach Anspruch 11, bei welchem der röhrenförmige Körper innere und äußere Verstärkungslagen (110, 112) und eine zwischen der inneren und der äußeren Verstärkungslage angeordnete Dichtungslage (114) umfasst.

14. Ein Schlauch nach Anspruch 11, 12 oder 13, ferner umfassend ein axiales Versteifungsmittel.

15. Ein Schlauch nach Anspruch 14, bei welchem das axiale Versteifungsmittel ein axiales Verstärkungsgeflecht (108) umfasst.

## Revendications

1. Raccord d'extrémité (200) pour un tuyau composite (100) du type comprenant un corps tubulaire (106) en matériau flexible disposé entre des éléments d'adhérence intérieur (102) et extérieur (104), ledit raccord d'extrémité comprenant un premier élément (202) adapté pour être placé à l'intérieur du tuyau et un deuxième élément (208) adapté pour être placé autour de l'extérieur du tuyau de façon à pouvoir rendre l'extrémité du tuyau étanche entre le premier et le deuxième élément, **caractérisé en ce qu'**une partie au moins du premier élément et/ou une partie au moins du deuxième élément est faite d'un matériau qui se dilate lors du refroidissement dans au moins une direction.

2. Raccord d'extrémité selon la revendication 1, dans lequel une partie au moins du premier élément (202) est faite d'un matériau qui se dilate lors du refroidissement dans au moins une de ses directions.

3. Raccord d'extrémité selon la revendication 2, dans lequel ladite partie du premier élément est adaptée pour se dilater lors du refroidissement dans une direction radiale vers l'extérieur par rapport à l'axe du tuyau.

4. Raccord d'extrémité selon l'une des revendications 1, 2 ou 3, dans lequel une partie au moins du premier élément et/ou une partie au moins du deuxième élément est faite d'un matériau composite.

5. Raccord d'extrémité selon la revendication 4, dans lequel une partie au moins du premier élément est faite d'un matériau composite.

6. Raccord d'extrémité selon la revendication 4 ou la revendication 5, dans lequel le matériau composite comprend des fibres de carbone, d'aramide, de verre ou de polyéthylène à très haut poids moléculaire (UHMWPE).

7. Raccord d'extrémité selon l'une quelconque des revendications précédentes, dans lequel une partie au moins du deuxième élément (208) est adaptée pour se contracter lors du refroidissement dans une direction radiale vers l'intérieur par rapport à l'axe du tuyau.

8. Raccord d'extrémité selon l'une quelconque des revendications précédentes, dans lequel le coefficient de dilatation thermique longitudinale du matériau qui se dilate lors du refroidissement va de 0 à -10 x 10⁻⁶ °K⁻¹.

9. Raccord d'extrémité selon l'une quelconque des revendications précédentes, dans lequel le matériau qui se dilate lors du refroidissement est un matériau composite comprenant des fibres de carbone ou des fibres de poly-p-phénylène téréphtalamide.

10. Raccord d'extrémité selon l'une quelconque des revendications précédentes, dans lequel le premier élément (202) est fait au moins en partie d'un matériau composite qui se dilate lors du refroidissement et le deuxième élément (208) est fait au moins en partie d'un matériau composite qui se contracte lors du refroidissement.

11. Tuyau (100) comprenant un corps tubulaire (106) en matériau flexible disposé entre des éléments d'adhérence intérieur (102) et extérieur (104) et comprenant en outre un raccord d'extrémité (200) selon l'une quelconque des revendications précédentes fixé à chaque extrémité du tuyau.

12. Tuyau selon la revendication 11, dans lequel le corps tubulaire comprend une couche de renfort et une couche d'étanchéité.

13. Tuyau selon la revendication 11, dans lequel le corps tubulaire comprend des couches de renfort intérieure (110) et extérieure (112) et une couche d'étanchéité (114) disposée entre lesdites couches de renfort intérieure et extérieure.

14. Tuyau selon l'une des revendications 11, 12 ou 13, comprenant en outre un moyen de renfort axial.

15. Tuyau selon la revendication 14, dans lequel le moyen de renfort axial comprend une tresse de renfort axial (108).
